# FASCICULE DE BREVET EUROPEEN

(11) **EP 2 242 691 B1**
(45) Date de publication et mention de la délivrance du brevet: **01.03.2017**
(21) Numéro de dépôt: 08853244.5
(22) Date de dépôt: 21.11.2008
(51) Int. Cl.: B64D 27/02, B64D 29/04, B64G 1/14, B64G 1/00, F42B 10/40, F42B 15/00

(54) **DISPOSITIF DE REDUCTION DE TRAINEE AERODYNAMIQUE**
VORRICHTUNG ZUM VERRINGERN DES AERODYNAMISCHEN WIDERSTANDES
DEVICE FOR REDUCING AERODYNAMIC DRAG

(30) Priorité: 29.11.2007 FR 0759433
(43) Date de publication de la demande: 27.10.2010
(73) Titulaire: Airbus Defence and Space SAS, 78130 Les Mureaux (FR)
(72) Inventeur: RAYMOND, Gérald, F-33160 Saint Medard En Jalles (FR); BOURDIEU, Philippe, F-33138 Lanton (FR)
(74) Mandataire: Ipside
(86) Numéro de dépôt international: PCT/EP2008/065956
(87) Numéro de publication internationale: WO 2009/068475

(56) Documents cités:
- DE-A1- 4 101 960
- DE-A1- 19 640 965
- US-A- 3 432 125
- US-A1- 2006 043 236
- US-B1- 6 745 979
- DATABASE WPI Week 200421 Thomson Scientific, London, GB; AN 2004-217609 XP002488135 & JP 2003 291864 A (TAKAGI SEIKO KK) 15 octobre 2003 (2003-10-15)

## Description

La présente invention a pour objet un dispositif de réduction de traînée aérodynamique due aux moteurs fusée d'un engin spatial tel qu'un avion spatial dans des phases de vol où ces moteurs ne sont pas encore utilisés tout en permettant à ces moteurs de fonctionner dans la phases de vol de transition atmosphérique/non atmosphérique et dans la phase de vol non atmosphérique ultérieure.

Elle trouve particulièrement son application pour les véhicules spatiaux qui comportent une motorisation aérienne classique pour le vol atmosphérique et une propulsion fusée pour le vol hors atmosphère.

On appelle traînée de culot la résistance au mouvement d'un véhicule due à sa section arrière.

Les écoulements de fluide qui ont du mal à suivre les profils arrières des véhicules en mouvement deviennent turbulents derrière le véhicule ce qui réduit la pression à l'arrière du véhicule et crée une forte résistance à l'avancement du véhicule.

Il existe des solutions passives réduisant la traînée arrière des véhicules et notamment il est connu de réaliser un profil arrière de véhicule en cône en utilisant une vessie gonflable comme par exemple décrit dans le document DE 41 01 960, d'ajouter des profils de déviation de flux comme décrit par exemple dans le document EP 0 273 850, un ou des appendices annulaires comme dans le document US 6 297 486, des déflecteurs latéraux comme dans le document US 6 926 345.

D'autres réalisations sont basées sur des moyens actifs tels que des volets mobiles comme décrit dans le document US 4 411 399 ou une injection de fluide à l'arrière du véhicule pour y combler la dépression.

Le document US 3 432 125 décrit un dispositif de couverture de l'arrière d'un aéronef repliable à arceaux et toile métallique résistant à haute température. Le document DE 41 01 960 A1 décrit un airbag qui se gonfle à l'arrière d'un missile.

Les véhicules aériens propulsés par réacteurs présentent une tuyère d'éjection des gaz et les réacteurs ne créent que peu de traînée du fait que le jet des gaz éjectés participe au profil aérodynamique de l'engin.

Par contre un moteur inutilisé crée énormément de traînée (jusqu'à un tiers de la traînée totale de l'engin).

C'est pour cela par exemple que la navette spatiale américaine actuellement en service est munie, lorsqu'elle est convoyée par avion, d'un capot arrière conique masquant les tuyères de ses moteurs fusées.

Ce capot n'est par contre pas utilisable lors d'un lancement de cette navette du fait qu'il serait nécessaire de le larguer avant l'allumage du moteur fusée ce qui obligerait à concevoir un dispositif de largage pesant et assurant qu'aucun débris ne puisse endommager les moteurs de la navette ou les boosters.

De même des dispositifs actifs amovibles sont difficiles à utiliser pour un avion spatial du fait qu'ils sont lourds et qu'ils nécessitent des dispositifs pour les manoeuvrer.

En outre, ces systèmes sont complexes à mettre en oeuvre, car ils doivent se déployer sans créer eux mêmes une traînée supplémentaire au moment de l'allumage du moteur fusée qui se fait en vol atmosphérique.

De même, l'usage de dispositifs actifs à injection de fluide nécessiterait d'embarquer le fluide dans le véhicule ce qui diminuerait sa charge utile.

Partant de cet art antérieur, la présente invention a pour objet la réalisation d'un dispositif de capotage de tuyère de moteur fusée léger, simple, ne perturbant pas le démarrage du moteur fusée, qui ne pose pas de problème de déploiement et qui évite les projections de débris et les risques de chute de ces débris vers le sol.

Pour ce faire la présente invention propose un dispositif de réduction de traînée aérodynamique selon la revendication 1.

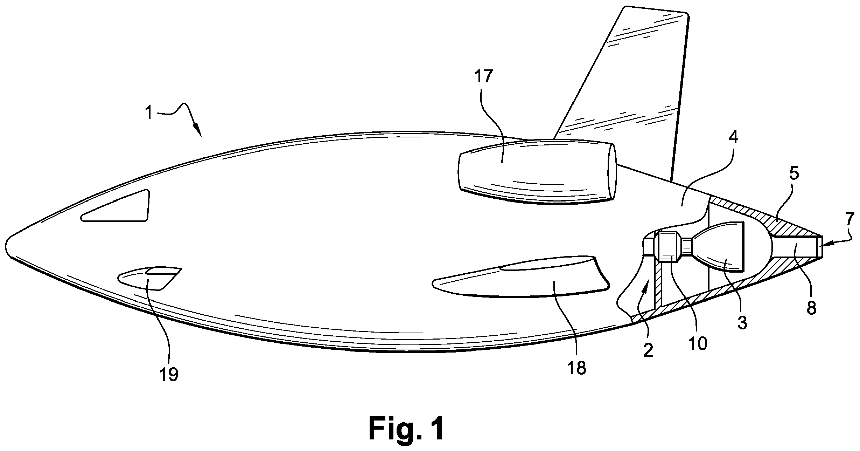

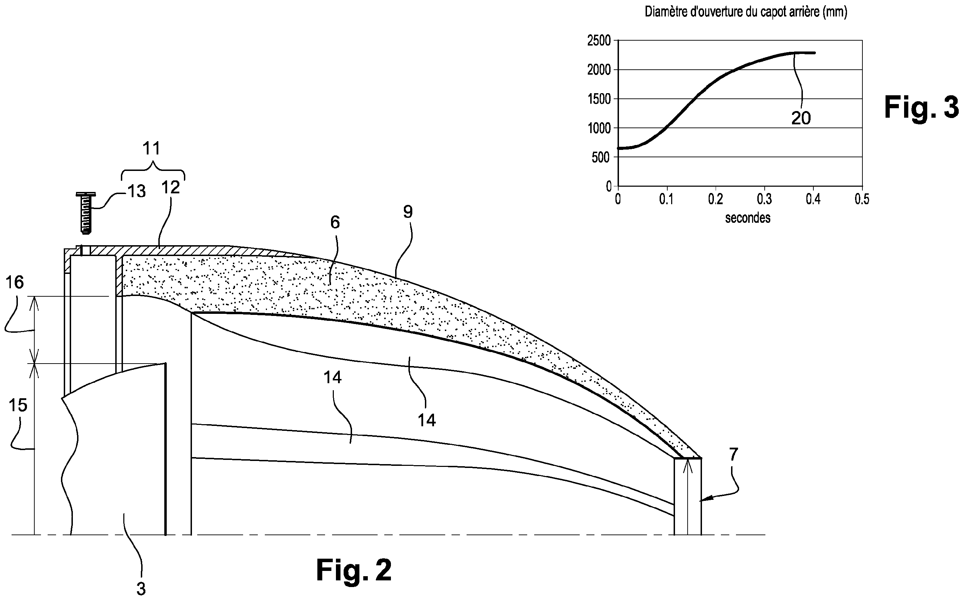

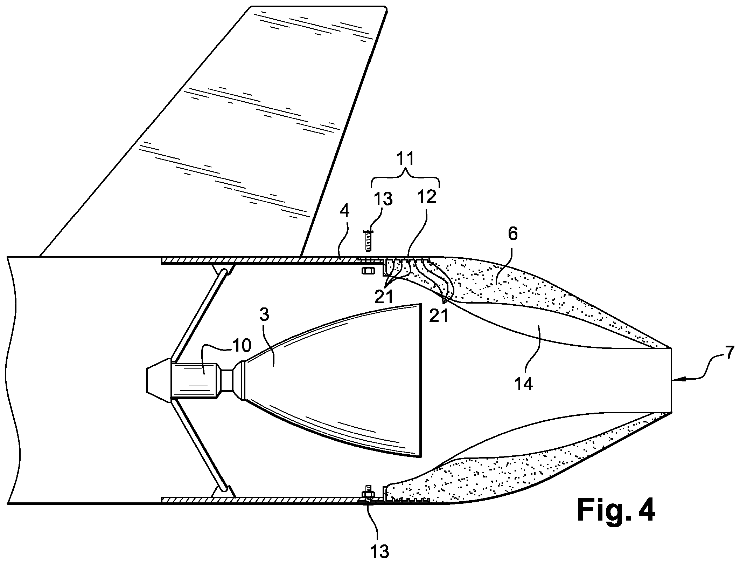

D'autres caractéristiques et avantages de l'invention seront mieux compris à la lecture de la description d'un exemple de réalisation non limitatif de l'invention en référence aux dessins qui représentent:
en figure 1: une représentation schématique éclatée d'un avion spatial comprenant le dispositif selon l'invention,
en figure 2: une demi-vue en coupe d'un exemple de réalisation d'un dispositif selon l'invention,
en figure 3: un tableau représentant l'ouverture par combustion, suite à l'allumage du moteur, de l'élément de masquage du dispositif de l'invention en fonction du temps;
en figure 4: une représentation schématique en coupe de l'implantation du dispositif de l'invention sur un fuselage d'aéronef.

La présente invention propose un dispositif de réduction de traînée aérodynamique d'un véhicule 1 tel qu'un avion spatial ou un lanceur spatial.

Le principe de l'invention est d'utiliser un dispositif passif qui est éliminé par le moteur fusée lui-même lors de son allumage. Le dispositif passif peut ainsi offrir une solution très légère dont la fiabilité est obtenue au travers de sa conception.

Le dispositif de l'invention est conçu pour permettre d'assurer l'allumage correct du moteur fusée et l'élimination complète du dispositif après allumage, de façon à éviter les risques de chute de débris vers le sol.

L'exemple représenté en figure 1 est un avion spatial, pourvu d'au moins un moteur 2 muni d'une tuyère 3 d'éjection de gaz dépassant de l'arrière du fuselage 4 de l'avion spatial.

La tuyère d'éjection des gaz du moteur s'évase en s'éloignant de l'arrière du fuselage du véhicule comme il est traditionnellement connu.

Le dispositif de masquage comporte au moins un élément de masquage 5 en matériau résorbable 6, c'est à dire un matériau qui s'élimine par combustion lorsqu'il est soumis à un flux de chaleur, adapté à s'éliminer (par combustion) dans le flux de la tuyère une fois le moteur allumé.

L'élément de masquage recouvre au moins une partie de la tuyère, la partie arrière de la tuyère 3 comme représenté en figure 2.

Selon l'exemple, le fuselage se prolonge autour d'une chambre de combustion 10 du moteur et autour d'au moins une partie de la tuyère (3) dudit moteur.

Le dispositif s'accroche au fuselage du véhicule à l'extrémité arrière de ce fuselage pour recouvrir la partie de tuyère non masquée par le fuselage et prolonger ce dernier selon une forme conique réduisant la traînée du véhicule dans sa phase de vol atmosphérique.

La figure 4 donne une représentation schématique en coupe de l'implantation du dispositif de l'invention sur un fuselage 4 d'aéronef.

L'élément de masquage est solidarisé à l'arrière du fuselage 4 du véhicule par des moyens de fixation amovibles 11.

Pour permettre de les réutiliser, les moyens de fixation amovibles 11 sont adaptés à être démontés et, selon l'exemple représenté en figure 4, les moyens de fixation amovibles comportent un élément de virole 12 sur lequel l'élément de masquage est collé ou surmoulé et un ensemble de vis-écrous 13.

La fixation de la virole sur le fuselage peut aussi être réalisé par un système de grenouillères non représenté.

Les moyens de fixation amovibles 11 restent fixée sur le fuselage du véhicule après combustion de l'élément de masquage et sont démontés après le retour de l'avion spatial pour les ré-équiper d'un nouvel élément de masquage ou les remplacer.

L'élément de masquage 5 représenté en section à la figure 2 et à la figure 4 est un capot de forme générale conique prolongeant extérieurement le fuselage du véhicule au delà de la tuyère 3 et dont le diamètre se réduit en s'éloignant du fuselage.

Selon l'exemple des figures 1 et 4, le fuselage se prolonge autour d'une chambre de combustion 10 du moteur et ici au moins une partie de la tuyère 3 dudit moteur, l'élément de masquage entourant la partie de la tuyère non masquée par le fuselage.

Il est bien entendu possible dans le cadre de l'invention de prévoir un élément de masquage plus long si on décide de ne pas entourer le moteur et partie de la tuyère par le fuselage.

Plutôt que de se refermer derrière la tuyère, le capot comporte préférablement une ouverture distale 7 en regard de l'ouverture de la tuyère pour laisser s'échapper les gaz chauds en début d'allumage du moteur et ne pas bloquer le jet naissant du moteur.

Comme représenté en figure 2, l'ouverture distale est de diamètre réduit par rapport à l'ouverture de la tuyère pour conserver un profil aérodynamique le plus efficace possible et pour que les gaz chauds commencent à brûler l'élément de masquage très tôt après l'allumage du moteur.

Sa section est un compromis entre les besoins d'allumage du moteur et la traînée.

En variante selon la figure 1, l'ouverture distale fait partie d'un canal 8, de diamètre réduit dans l'axe du capot adapté à laisser le moteur se ventiler durant une partie de vol du véhicule moteur non encore allumé et à permettre au jet du moteur de s'établir.

Le matériau résorbable 6 choisi est préférablement un matériau alvéolaire de faible densité et donc très léger mais suffisamment rigide pour supporter les contraintes aérodynamiques et les vibrations issues du vol de l'engin.

Le matériau résorbable du capot est choisi de façon à ce qu'il soit léger et qu'il puisse se résorber sous l'action du jet issu de la tuyère. Ce matériaux peut être choisi parmi des matériaux alvéolaires et notamment le polystyrène expansé, la mousse de mélamine, le PVC expansé, la mousse de polyuréthane ou autre matériau résorbable léger et résistant.

De façon classique en aéronautique, la forme intérieure du capot comporte des nervures 14 de manière à en augmenter la rigidité.

Le matériau est choisi pour que l'allumage du moteur, qui profite d'ailleurs d'un environnement protégé, engendre un jet dont la température et le débit sont tels qu'ils fondent et vaporisent très rapidement le capot. En pratique ce dernier est préférablement conçu pour avoir quasiment disparu avant l'établissement du régime propulsif stabilisé.

Pour un diamètre arrière du fuselage 2300 mm, un diamètre 15 de la tuyère de 1500 mm et en prévoyant une marge nécessaire pour le débattement de la tuyère pour le pilotage de l'avion spatial, le diamètre intérieur 15 + 16 du capot est de l'ordre de 2100 mm. Pour une bonne efficacité aérodynamique, sa longueur est de l'ordre de 3 m pour un avion d'une longueur de l'ordre de 20 mètres

Un exemple de réalisation est réalisé avec un capot monobloc en polystyrène expansé moulé.

Le polystyrène est un bon matériau pour cette application car il présente une température de fusion basse 150°C - 170°C, il est disponible en bloc de dimension suffisante pour pouvoir tailler les prototypes à faible coût et bien que considéré comme un matériau à cellule fermé il résiste sans dégâts à une dépression de 1000 à 30 mBar en 5 minutes ce qui le qualifie pour une altitude de 25 km.

En outre, ses caractéristiques mécaniques permettent de réaliser le capot et, parmi les mousses courantes telles que celle citées précédemment, la mousse de polystyrène est celle qui fond le mieux.

De plus c'est un matériau peu coûteux, facile à mettre en oeuvre et non polluant.

Un choisira notamment un polystyrène connu sous la référence commerciale « UNIMAT FM 24kg/m3 ".

Cette mousse est un matériau ignifugé, ce qui signifie que les débris éventuels s'éteindront d'eux même.

On peut éventuellement ajouter un colorant dans la mousse pour réaliser un panache lors de l'allumage du moteur.

La forme du capot est taillée ou moulée et le bloc de mousse est collé sur la virole avantageusement en aluminium qui assure l'interface avec la structure.

Des stries ou indentations 21 sont éventuellement prévues sur la virole 12 à l'interface avec le capot 6 pour en accroître la rétention.

Le dispositif s'accroche au fuselage au moyen de la virole qui reste fixée sur le fuselage après disparition de l'élément de masquage de sorte qu'elle protège la tuyère lors de la rentrée.

Comme vu précédemment, la virole est démontée après l'atterrissage pour recyclage.

Le matériau résorbable 6 est recouvert d'une peau 9 représentée en figure 2 pour un meilleur état de surface. Cette peau extérieure, par exemple réalisées en époxy, accroît la résistance à l'impact du capot et permet de peindre l'élément de masquage.

En considérant une charge latérale de l'ordre de 20000N/m3 ce qui est valeur standard en aéronautique, une résistance à la rupture de 200 KPa et un coefficient de sécurité de 2, il faut disposer d'une peau de 200 mm d'épaisseur de mousse pour tenir le moment fléchissant à l'interface mousse/virole. Cette épaisseur se réduit vers le bout du capot opposé à la fixation.

La masse de mousse est alors 65 kg environ.

La virole alu est estimée à 600 mm de large et à une épaisseur de 3 mm, conduisant à une masse de 35 kg environ.

Le polystyrène est un matériau qui ne possède pas de chaleur latente de fusion du fait de sa nature non cristalline. Par contre il possède une chaleur spécifique donnée dans la littérature voisine de 1.3 kJ/(kgx°K). Le polystyrène devient pâteux vers 120°C.

La température de fusion du polystyrène se situe entre 150 et 170°C. La température des fils chauds à couper les blocs est réglée entre 100 et 200°C en fonction de la vitesse de découpe demandée. Au-delà d'une certaine température, le polystyrène se sublime devant le fil, ce qui évite d'encrasser ce dernier. On considère qu'une élévation de température de -50°C (ambiante à 10 000 m d'altitude) à 170°C sera suffisante pour fondre ou sublimer le matériau.

L'effet abrasif du jet n'est pas considéré si ce n'est pour évacuer les gaz, gouttes et suies dues à la combustion du capot.

Le graphique de la figure 3 donne une estimation du diamètre 20 d'ouverture du capot en fonction du temps selon l'application considérée.

Compte tenu de la densité du matériau de l'ordre de 24 kg/m3, c'est donc un flux de 1300 x 24 x 220 = 6900 kW/m2 qu'il est nécessaire d'appliquer pour réduire le polystyrène à la vitesse de 1 m/s.

Par ailleurs la température de flamme en sortie de tuyère est estimée à 3000°C. Cette flamme est au contact direct du polystyrène. La loi de Stephan nous permet de calculer le flux thermique qui est de 5.67 10-8 x 30004 = 4600 kW/m2.

Il faut donc selon ces données moins de 0,2 secondes pour faire disparaître le capot au droit de la tuyère, là où l'épaisseur est de l'ordre de 10 cm, et 0,4 secondes pour le faire disparaître dans sa quasi totalité. En pratique, compte tenu des effets de jet, il est probable que le polystyrène sera évacué dés qu'il atteint le point où il devient pâteux et perd sa cohésion soit environ après 0,14 secondes. Cette durée est à comparer à celle nécessaire à l'établissement du régime moteur, par exemple 7 secondes pour les moteurs Vulcain de la fusée Ariane.

La combustion du polystyrène (C8H8) ne donne pas lieu à l'émission de produits polluants ce qui rend ce matériau particulièrement adapté.

Par ailleurs, la présence du capot diminuera les turbulences aéronautiques dans la tuyère et facilitera la mise en combustion du moteur.

L'invention est particulièrement adaptée pour les véhicules suborbitaux dont un exemple schématique est donné en figure 1, où la première partie de la trajectoire est assurée par une propulsion de type aéronautique, avec des moteurs 17 fonctionnant avec l'oxygène de l'air et des plans sustentateurs 18, 19, avant de passer à une propulsion de type fusée.

L'invention est utile par la réduction de traînée qu'elle permet eut égard à sa faible masse et sa simplicité, que le véhicule soit en deux étage (porteur avion puis véhicule suborbital fusée) ou à étage unique.

L'invention peut également être appliquée à des ensembles de lanceurs multi-étages, par exemple pour réduire la traînée des missiles embarqués sur avion.

L'invention n'est pas limitée à l'exemple représenté et notamment l'élément de capot peut être de section ovale dans le cas où l'engin spatial comporterait deux moteurs ou plus.

## Revendications

1. Dispositif de réduction de traînée aérodynamique, pour un véhicule (1) pourvu d'au moins un moteur fusée (2) muni d'une tuyère (3) d'éjection de gaz dépassant de l'arrière du fuselage (4) du véhicule et s'évasant en s'éloignant de l'arrière du fuselage du véhicule, comportant au moins un élément de masquage (5) d'au moins une partie de la tuyère, **caractérisé en ce que** l'élément de masquage (5) est constitué par un dispositif passif éliminé par le moteur fusée lui-même lors de son allumage, en matériau combustible résorbable (6) s'éliminant par combustion dans le flux de la tuyère une fois le moteur fusée allumé.

2. Dispositif selon la revendication 1 pour lequel ledit élément de masquage (5) est un capot de forme générale conique destiné à prolonger extérieurement le fuselage (4) du véhicule au delà de la tuyère (3) et dont le diamètre se réduit dans une direction s'éloignant du fuselage.

3. Dispositif selon la revendication 2 pour lequel le capot comporte une ouverture distale (7) en regard de l'ouverture de la tuyère.

4. - Dispositif selon la revendication 3 pour lequel l'ouverture distale est de diamètre réduit par rapport à l'ouverture de la tuyère.

5. Dispositif selon la revendication 3 ou 4 pour lequel l'ouverture distale fait partie d'un canal (8), de diamètre réduit dans l'axe du capot adapté à laisser le moteur se ventiler durant une partie de vol du véhicule moteur non encore allumé et à permettre au jet du moteur de s'établir.

6. Dispositif selon l'une quelconque des revendications précédentes pour lequel le matériau résorbable (6) est un matériau alvéolaire.

7. Dispositif selon la revendication 6 pour lequel le matériau alvéolaire est choisi parmi le polystyrène expansé, la mousse de mélamine, le PVC expansé, la mousse de polyuréthane.

8. Dispositif selon l'une quelconque des revendications précédentes pour lequel le matériau résorbable (6) est recouvert d'une peau (9) pour un meilleur état de surface.

9. Véhicule spatial comportant un dispositif selon l'une des revendications précédentes pour lequel le dispositif s'accroche au fuselage.

10. Véhicule spatial selon la revendication 9 pour lequel le fuselage se prolonge autour d'une chambre de combustion (10) du moteur.

11. Véhicule spatial selon la revendication 9 pour lequel le fuselage se prolonge autour d'au moins une partie de la tuyère (3) dudit moteur.

12. Véhicule spatial selon l'une des revendications 9 à 11 pour lequel l'élément de masquage est solidarisé à l'arrière du fuselage du véhicule par des moyens de fixation amovibles (11).

13. Véhicule spatial selon la revendication 12 pour lequel les moyens de fixation amovibles comportent un élément de virole (12).

14. Véhicule spatial selon l'une des revendications 12 ou 13 pour lequel les moyens de fixation amovibles (11) de l'élément de masquage sur le fuselage sont adaptés à être démontés, les moyens de fixation amovibles restant fixée sur le fuselage du véhicule après combustion de l'élément de masquage.

## Patentansprüche

1. Vorrichtung zur Verringerung des aerodynamischen Widerstandes für ein Fahrzeug (1), welches mit mindestens einem Raketenmotor (2) versehen ist, der mit einer Gasausstoßdüse (3) ausgerüstet ist, welche über das Ende des Rumpfes (4) des Fahrzeugs hinausragt und sich unter Entfernen vom hinteren Teil des Rumpfes des Fahrzeugs erweitert, aufweisend mindestens ein Element zur Verkleidung (5) von mindestens einem Teil der Düse, **dadurch gekennzeichnet, dass** das Verkleidungselement (5) von einer passiven Vorrichtung, welche von dem Raketenmotor selbst bei dessen Zündung entfernt wird, aus resorbierbarem, brennbarem Material (6) gebildet wird, welches sich durch Verbrennung in dem Strom der Düse auflöst, wenn der Raketenmotor gezündet ist.

2. Vorrichtung nach Anspruch 1, bei welcher das Verkleidungselement (5) eine Haube von allgemeiner konischer Form ist, welche dafür vorgesehen ist, den Rumpf (4) des Fahrzeugs über die Düse (3) hinaus außen zu verlängern, und deren Durchmesser sich in einer Richtung, die sich von dem Rumpf entfernt, verringert.

3. Vorrichtung nach Anspruch 2, bei welcher die Haube eine distale Öffnung (7) aufweist, welche der Öffnung der Düse gegenüber liegt.

4. Vorrichtung nach Anspruch 3, bei welcher die distale Öffnung einen in Bezug auf die Öffnung der Düse verringerten Durchmesser aufweist.

5. Vorrichtung nach Anspruch 3 oder 4, bei welcher die distale Öffnung Teil eines Kanals (8) mit verringertem Durchmesser in der Achse der Haube ist, welcher dafür angepasst ist, den Motor während eines Teils des Fluges des Fahrzeugs mit noch nicht gezündetem Motor ventilieren zu lassen und es dem Strahl des Motors zu ermöglichen, sich zu etablieren.

6. Vorrichtung nach einem der vorhergehenden Ansprüche, bei welcher das resorbierbare Material (6) ein Schaummaterial ist.

7. Vorrichtung nach Anspruch 6, bei welcher das Schaummaterial aus geblähtem Polystyrol, Melaminschaum, geblähtem PVC, Polyurethanschaum ausgewählt wird.

8. Vorrichtung nach einem der vorhergehenden Ansprüche, bei welcher das resorbierbare Material (6) für eine bessere Oberflächenbeschaffenheit mit einer Haut (9) beschichtet ist.

9. Raumfahrzeug, aufweisend eine Vorrichtung nach einem der vorhergehenden Ansprüche, bei welchem sich die Vorrichtung an den Rumpf anhängt.

10. Raumfahrzeug nach Anspruch 9, bei welchem sich der Rumpf um eine Brennkammer (10) des Motors herum verlängert.

11. Raumfahrzeug nach Anspruch 9, bei welchem sich der Rumpf um mindestens einen Teil der Düse (3) des Motors herum verlängert.

12. Raumfahrzeug nach einem der Ansprüche 9 bis 11, bei welchem das Verkleidungselement mit dem hinteren Teil des Rumpfes des Fahrzeugs durch abnehmbare Befestigungsmittel (11) fest verbunden ist.

13. Raumfahrzeug nach Anspruch 12, bei welchem die abnehmbaren Befestigungsmittel ein Einspannelement (12) aufweisen.

14. Raumfahrzeug nach einem der Ansprüche 12 oder 13, bei welchem die abnehmbaren Mittel zur Befestigung (11) des Verkleidungselements an dem Rumpf dafür angepasst sind, abgebaut zu werden, wobei die abnehmbaren Befestigungsmittel nach Verbrennung des Verkleidungselements am Rumpf des Fahrzeugs verbleiben.

## Claims

1. Device for reducing aerodynamic drag, for a vehicle (1) provided with at least one rocket motor (2) equipped with a gas ejection jet pipe (3) protruding beyond the rear of the fuselage (4) of the vehicle and widening with increasing distance away from the rear of the fuselage of the vehicle, comprising at least one masking element (5) concealing at least part of the jet pipe, **characterized in that** the masking element (5) is made up of a passive device eliminated by the rocket motor itself when it is ignited, made of a resorbable combustible material (6) that is eliminated by combustion in the stream from the jet pipe once the rocket motor is ignited.

2. Device according to Claim 1, for which the said masking element (5) is a cowl of conical overall shape intended to extend the fuselage (4) of the vehicle externally beyond the jet pipe (3) and the diameter of which reduces in a direction of increasing distance away from the fuselage.

3. Device according to Claim 2, for which the cowl comprises a distal opening (7) facing the opening of the jet pipe.

4. Device according to Claim 3, for which the distal opening is of reduced diameter in comparison with the opening of the jet pipe.

5. Device according to Claim 3 or 4, for which the distal opening forms part of a duct (8) of reduced diameter along the axis of the cowl and designed to allow the motor to breathe during part of the flight of the vehicle with the motor not yet ignited and to allow the rocket motor jet to become established.

6. Device according to any one of the preceding claims, for which the resorbable material (6) is a cellular material.

7. Device according to Claim 6, for which the cellular material is chosen from expanded polystyrene, melamine foam, expanded PVC, polyurethane foam.

8. Device according to any one of the preceding claims, for which the resorbable material (6) is covered with a skin (9) to give a better surface finish.

9. Space vehicle comprising a device according to one of the preceding claims, for which the device is attached to the fuselage.

10. Space vehicle according to Claim 9, for which the fuselage extends around a combustion chamber (10) of the motor.

11. Space vehicle according to Claim 9, for which the fuselage extends around at least part of the jet pipe (3) of the said motor.

12. Space vehicle according to one of Claims 9 to 11, for which the masking element is secured to the rear of the fuselage of the vehicle by removable fixing means (11).

13. Space vehicle according to Claim 12, for which the removable fixing means comprise a ferrule element (12).

14. Space vehicle according to one of Claims 12 or 13, for which the removable fixing means (11) for fixing the masking element to the fuselage are designed to be dismantled, the removable fixing means remaining fixed to the fuselage of the vehicle after the masking element has burnt away.
